# EUROPEAN PATENT SPECIFICATION

(11) **EP 3 437 510 B1**
(45) Date of publication and mention of the grant of the patent: **19.06.2019**
(21) Application number: 18000620.7
(22) Date of filing: 23.07.2018
(51) Int. Cl.: A45C 13/00, A45D 42/00, A45C 11/00

(54) **SELFIE MIRROR FOR SMARTPHONES**
SELFIE-SPIEGEL FÜR SMARTPHONES
MIROIR SELFIE POUR SMARTPHONES

(30) Priority: 03.08.2017 DE 202017004039 U; 27.10.2017 DE 202017005608 U
(43) Date of publication of application: 06.02.2019
(73) Proprietor: Richter, Harald, 75331 Engelsbrand (DE)
(72) Inventor: Richter, Harald, 75331 Engelsbrand (DE)
(74) Representative: Gallo, Wolfgang

(56) References cited:
- KR-A- 20160 097 175
- US-A1- 2013 098 788
- US-B1- 8 573 395

## Description

The invention relates to a selfie mirror that may be attached to smartphones or sleeves for smartphones.

Because the camera and the flash light are usually located on the back of a smartphone, and on smartphones that also have a front camera the rear camera is usually much better, selfie mirrors are used in order to achieve a better orientation of the smartphone without looking at the screen when taking pictures.

Self-adhesive mirrors that can be attached to the smartphone, as well as smartphone sleeves with selfie mirrors already attached to them, as well as selfie mirrors that may be attached to a selfie stick or plugged onto the edge of a smartphone for use, are already known in prior art (see document US 8,573,395).

In contrast, it is an object of the invention to create a selfie mirror with additional benefits. This object is achieved according to the invention by the arrangement defined in claim 1. Advantageous embodiments are the subject matter of the dependent claims.

The selfie mirror according to the invention is combined with a metal plate, so that the selfie mirror attached to a smartphone may not only be used as such, but also allows the smartphone to be fixed to any magnetic holder.

The selfie mirror according to the invention may have a self-adhesive configuration to be glued to a smartphone or a smartphone case, or it may be integrated into a smartphone or a smartphone sleeve, or it may be integrated into a handle bar that may be attached to or disposed on the back of the smartphone.

Some example embodiments are described below with reference to the accompanying drawings, in which:
- Fig. 1: shows a selfie mirror having a circular configuration in a perspective view;
- Fig. 2: shows an enlarged partial section through the selfie mirror according to the invention;
- Fig. 3: shows section similar to Fig. 2 through an embodiment wherein the mirror is formed by a reflecting surface of a ferromagnetic metal plate, and
- Fig. 4: schematically shows an embodiment wherein the selfie mirror has a frame connected to a smartphone or smartphone housing via a hinge joint.

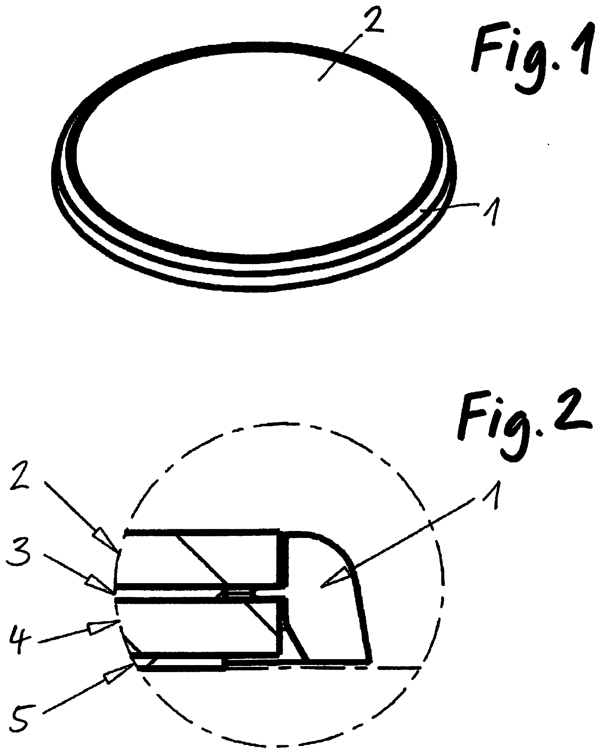

Fig. 1 shows a selfie mirror according to the invention in a perspective view. Here the frame 1 and the upper side of the mirror 2 can be seen.

Fig. 2 shows a section through an edge area of the selfie mirror according to Fig. 1. It consists of a frame 1 which can be made of plastics and extends around the periphery of the components and holds them together, a mirror 2, an adhesive foil or adhesive layer 3 arranged on the lower side thereof, a ferromagnetic metal plate 4 connected to the mirror 2 by means of the adhesive foil or adhesive layer 3, and a self-adhesive foil or adhesive layer 5 on the lower side of the metal plate 4 which is used to attach the selfie mirror to the smartphone. The adhesive layer 3 can be omitted if frame 1 holds the parts together mechanically.

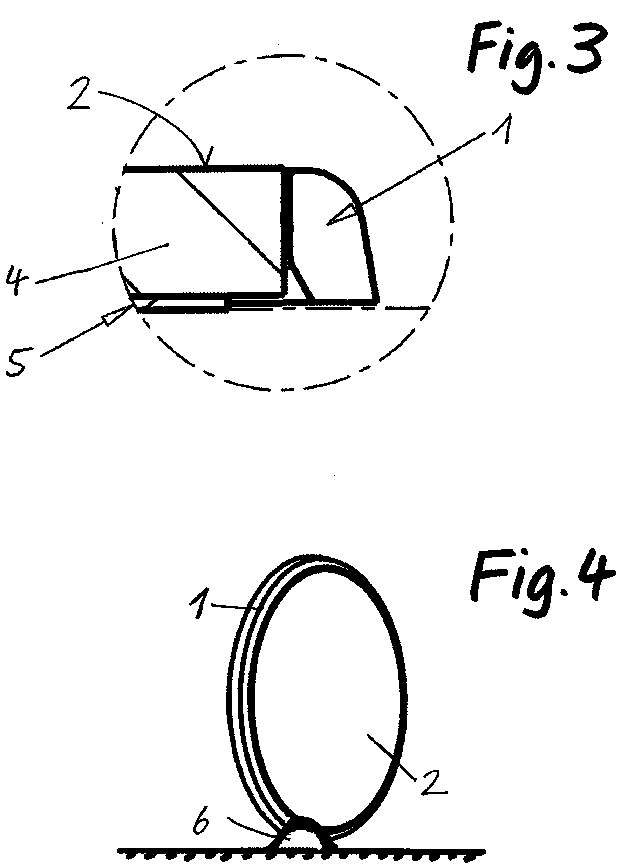

Fig. 3 shows another embodiment of a selfie mirror according to the invention, in a section similar to Fig. 2, wherein the mirror 2 combined with the ferromagnetic metal plate 4 is formed by a high-gloss polished reflecting surface of the metal plate 4. In this design also, a frame 1 surrounding the ferromagnetic metal plate 4 may be provided, and a self-adhesive foil or self-adhesive layer 5 may also be provided on the underside of the metal plate 4 in this design, too.

In both of the described designs according to figures 1 to 3, the combination of mirror 2 and metal plate 4 may be connected to the smartphone or the smartphone sleeve, as an alternative to using a self-adhesive layer or self-adhesive film 5 on the lower side of the metal plate 4 by gluing, welding or one-piece design of the frame 1 on the smartphone housing or a smartphone sleeve. The mirror/metal plate combination is then held in place by the frame 1.

Fig. 4 schematically shows that a frame 1 holding the mirror/metal plate combination 2, 4 may be pivotably mounted on the smartphone or on the smartphone sleeve by means of a hinge connection 6, so that the selfie mirror can be pivoted into any desired position relative to the smartphone.

The embodiments shown in the drawings are of exemplary nature only. The point substantial to the invention is the combination of the mirror 2 with a metal plate 4 arranged therebelow, wherein the connection between the mirror 2 and the metal plate 4 may be effected in any desired way. The frame 1 may also be part of a handle bar that may be attached to a smartphone or may be configured integrally therewith.

## Claims

1. A selfie mirror for smartphones, **characterized in that** it comprises a combination of a mirror (2) and a ferromagnetic metal plate (4) arranged therebelow and connected to the mirror (2), as well as means (5) for fixing the arrangement comprised of the mirror (2) and the ferromagnetic metal plate (4) to the smartphone or a smartphone case.

2. The selfie mirror according to claim 1, wherein the mirror (2) and the metal plate (4) are mechanically connected to each other by means of an adhesive foil (3) or adhesive layer arranged therebetween.

3. The selfie mirror according to claim 2, wherein the mirror (2) and the metal plate (4) are mechanically held together and/or enclosed by a frame (1) surrounding them around their periphery.

4. The selfie mirror according to claim 1, wherein the mirror (2) is part of the ferromagnetic metal plate (4) and is formed by a high-gloss polished reflecting surface thereof.

5. The selfie mirror according to claim 4, wherein the ferromagnetic metal plate (4) is held and/or enclosed by a frame (1) surrounding it around its periphery.

6. The selfie mirror according to claim 3 or 5, wherein the frame (1) is an integral part of a smartphone housing or a smartphone sleeve.

7. The selfie mirror according to claim 3 or 5, wherein the frame (1) is part of a handle bar which may be attached to a smartphone or a smartphone sleeve or integrally formed therewith.

8. The selfie mirror according to claim 3, 5 or 7, wherein the frame (1) is pivotably connected to a smartphone or a smartphone sleeve, or to the handle bar, via a hinge connection (6).

9. The selfie mirror according to claim 5, wherein the frame is an integral part of a smartphone housing or a smartphone sleeve.

10. The selfie mirror according to claim 5, wherein the frame is part of a handle bar which may be attached to a smartphone or a smartphone sleeve or integrally formed therewith.

11. The selfie mirror according to claim 5, 7 or 10 wherein the frame is pivotably connected to a smartphone or a smartphone sleeve, or to the handle bar, via a hinge connection.

## Patentansprüche

1. Selfie-Spiegel für Smartphones, **dadurch gekennzeichnet, dass** er aus einer Kombination eines Spiegels (2) und einer unter diesem angeordneten und mit dem Spiegel (2) verbundenen ferromagnetischen Metallplatte (4) sowie Mitteln (5) zum Fixieren des Verbunds aus dem Spiegel (2) und der ferromagnetischen Metallplatte (4) am Smartphone oder einer Smartphonehülle besteht.

2. Selfie-Spiegel nach Anspruch 1, wobei der Spiegel (2) und die Metallplatte (4) durch eine dazwischen angeordnete Klebefolie (3) oder Klebeschicht mechanisch miteinander verbunden sind.

3. Selfie-Spiegel nach Anspruch 2, wobei der Spiegel (2) und die Metalllatte (4) durch einen diese an ihrem Umfang umgebenden Rahmen (1) mechanisch zusammengehalten und/oder umschlossen werden.

4. Selfie-Spiegel nach Anspruch 1, wobei der Spiegel (2) Bestandteil der ferromagnetischen Metallplatte (4) ist und durch deren hochglanzpolierte spiegelnde Oberfläche gebildet ist.

5. Selfie-Spiegel nach Anspruch 4, wobei die ferromagnetische Metallplatte (4) durch einen diese an ihrem Umfang umgebenden Rahmen (1) gehalten und/oder umschlossen wird.

6. Selfie-Spiegel nach Anspruch 3 oder 5, wobei der Rahmen (1) integraler Bestandteil eines Smartphonegehäuses oder einer Smartphonehülle ist.

7. Selfie-Spiegel nach Anspruch 3 oder 5, wobei der Rahmen (1) Bestandteil eines an einem Smartphone oder einer Smartphonehülle anbringbaren oder damit integral ausgebildeten Handgriffs ist.

8. Selfie-Spiegel nach Anspruch 3, 5 oder 7, wobei der Rahmen (1) über eine Scharnierverbindung (6) schwenkbar mit einem Smartphone oder einer Smartphonehülle bzw. mit dem Handgriff verbunden ist.

9. Selfie-Spiegel nach Anspruch 5, wobei der Rahmen ein integraler Teil eines Smartphonegehäuses oder einer Smartphonehülle ist.

10. Selfie-Spiegel nach Anspruch 5, wobei der Rahmen Teil eines Handgriffs ist, der an einem Smartphone oder einer Smartphonehülle befestigt war oder damit integral ausgebildet ist.

11. Selfie-Spiegel nach Anspruch 5,7 oder 10, wobei der Rahmen über eine Schamierverbindung schwenkbar mit einem Smartphone oder einer Smartphonehülle oder dem Handgriff verbunden ist.

## Revendications

1. Miroir selfie pour smartphones, **caractérisé en ce qu'**il comprend une combination d'un miroir (2) et une plaque (4) de métal ferromagnétique disposée au-dessous du et reliée au miroir (2), et un moyen (5) pour fixer l'ensemble du miroir (2) et de la plaque (4) de métal ferromagnétique au smartphone ou à un étui du smartphone.

2. Miroir selfie selon la revendication 1, le miroir (2) et la plaque (4) de métal étant reliés mécaniquement l'un à l'autre au moyen d'une feuille adhésive (3) ou une couche adhésive disposée entre eux.

3. Miroir selfie selon la revendication 2, le miroir (2) et la plaque (4) de métal étant maintenus mécaniquement ensemble par et/ou encastrés dans un cadre (1) qui les entoure autour de leur périphérie.

4. Miroir selfie selon la revendication 1, le miroir (2) faisant partie de la plaque (4) de métal ferromagnétique et étant formé par une surface polie miroir et réfléchissante de celle-ci.

5. Miroir selfie selon la revendication 4, dans lequel la plaque (4) de métal ferromagnétique est maintenue par et/ou encastrée dans un cadre (1) qui l'entoure autour de sa périphérie.

6. Miroir selfie selon la revendication 3 ou 5, dans lequel le cadre (1) est une partie intégrale d'un boîtier du smartphone ou d'un étui de smartphone.

7. Miroir selfie selon la revendication 3 ou 5, dans lequel le cadre (1) fait partie d'une poignée qui peut être attachée à un smartphone ou un étui de smartphone, ou est intégralement formée avec celui-ci.

8. Miroir selfie selon la revendication 3, 5 ou 7, dans lequel le cadre (1) est relié de manière pivotante à un smartphone ou un étui de smartphone, ou à la poignée, au moyen d'un raccord à charnière (6).

9. Miroir selfie selon la revendication 5, dans lequel le cadre est une partie intégrale d'un boîtier du smartphone ou d'un étui de smartphone.

10. Miroir selfie selon la revendication 5, dans lequel le cadre fait partie d'une poignée qui peut être attachée à un smartphone ou un étui de smartphone, ou est intégralement formée avec celui-ci.

11. Miroir selfie selon la revendication 5, 7 ou 10, dans lequel le cadre est relié de manière pivotante à un smartphone ou un étui de smartphone, ou à la poignée, au moyen d'un raccord à charnière.
